# EUROPEAN PATENT APPLICATION

(11) **EP 4 484 076 A1**
(43) Date of publication of application: **01.01.2025**
(21) Application number: 23182351.9
(22) Date of filing: 29.06.2023
(51) Int. Cl.: B25J 9/16

(54) **COMPUTER-IMPLEMENTED METHOD, COMPUTER-PROGRAM PRODUCT AND ROBOT CONTROL DEVICE FOR MOTION PLANNING OF ROBOT MANIPULATORS**

(71) Applicant: Siemens Aktiengesellschaft, 80333 München (DE)
(72) Inventor: Schmitt, Philipp Sebastian, 80797 München (DE); Dietrich, Vincent, 80639 München (DE); Neubauer, Werner, 81739 München (DE); Wirnshofer, Florian, 80939 München (DE)
(74) Representative: Siemens Patent Attorneys

(57) **Abstract**

In order to plan automatically collision-free motions of robot manipulators and to automatically execute the motions accordingly planned it is proposed that
(i) collision-free motions are planned (pln) by creating (crt) a motion plan (MPP) for a robot manipulator (RM) controlled by a robot control device (RCD)
(ii) a motion planner (CIT, PRC, PRC, MPC) realized preferably on the robot control device and based on a set of motion primitives (SoMP, LoMP) is provided with a model (MD) of the robot manipulator's (RM) kinematics and geometry and a work environment (WE) of the robot manipulator, an initial configuration of the robot manipulator (SPT, MPSD) and a goal configuration of the robot manipulator (TPT, MPTD),
(iii) the motion planner will use by selection (slt) a predetermined set of motion primitives (PMP, PMP', SMP, SMP'), also called as local planners or steering functions, to create by collision check (COL, dtc, chk, chk') a hypothetical continuous motion (HCM) from the start configuration (SPT, MPSD) to the goal configuration(TPT, MPTD),
(iv) the hypothetical motion is checked for the collisions (COL) using the model (MD) of the robot manipulator's (RM) kinematics and geometry and the work environment (WE) of the robot manipulator and if no collision occurs, the motion plan (MPP) for a robot manipulator (RM) is created.

## Description

The invention refers to a computer-implemented method for motion planning of robot manipulators according to the preamble of claim 1, a computer-implemented tool for motion planning of robot manipulators according to the preamble of claim 3, a robot control device for motion planning of robot manipulators according to the preamble of claim 5 and a robotic system according to the preamble of claim 6.

In the course of motion planning of robot manipulators it is one problem that motion planners typically return their planned motions as a trajectory represented as spline motion (cf. https://en.wikipedia.org/wiki/Spline (mathematics)).

The spline motion refers to a movement where the robot manipulator passes through each path point describing a smooth curve. The spline motion refers to the movement where the robot manipulator passes through each path point describing a smooth curve. In order to perform a spline motion and to move the robot manipulator along a spline orbit a command tool is used specifying path numbers. Thereby multiple path points or position data can be registered to a specified path data set. Spline motion uses the specified path data set to pass through each registered path point at a constant speed in a defined order to form a smooth curve. Data saved in advance may be used as path data. This approach allows the motion planner to freely determine a geometric path of the robot manipulator's motion as well as the timing of this motion. The problem now lies in the fact that most robot controllers do not directly support the execution of such externally computed spline-motions.

A typical approach used today to solve this problem is to program the robot manipulator motions using a "teach in"-concept, i.e. an approach without any automatic planning at all.

When automatic planning is used, this planning is typically done offline and then this planning is manually reteached on the robot manipulator respectively the robot, i.e. this means automatic planning, but no automatic execution.

A further approach typically employed in research is to implement custom interpolators for the robot manipulator respectively the robot. This approach is very expensive, as many of the features a robot control device is equipped with need to be reverse engineered and re-implemented. These features include safety, real-time requirements, compensation of robot-dynamics and calibration parameters and many more.

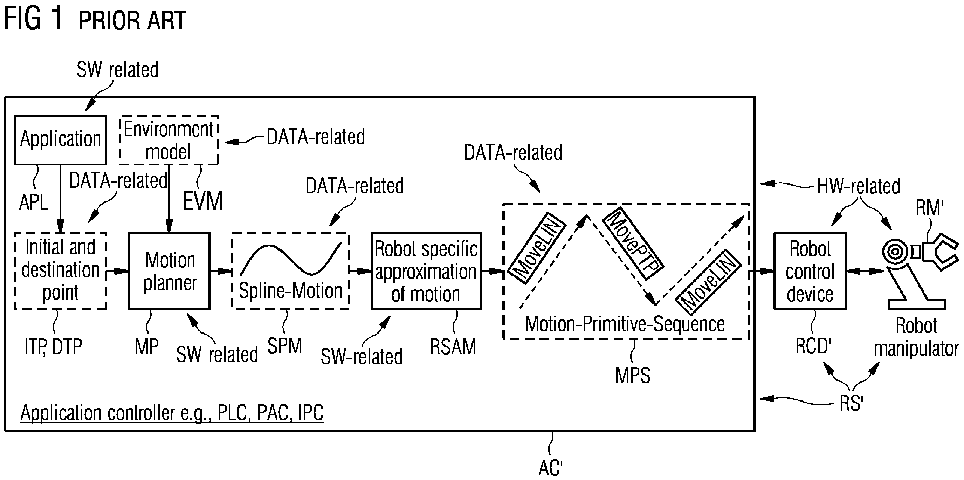

FIGURE 1 shows - as state of the art - a robotic system RS' for motion planning of a robot manipulator RM based on an application controller AC' such as a "Programmable Logic Controller <PLC>", a "Process Automation Controller <PAC>" and an "Industrial Personal Computer <IPC>".

Then motion planning of this robotic system RS' starts with an application APL' which provides an initial point ITP and a destination point DTP for a motion planner MP. By using these points ITP, DTP and further inputs of an environment model EVM the motion planner MP creates a spline motion SPM.

Next by applying a robot specific approximation of motion RSAM on the spline motion a motion primitive sequence MPS is generated. Motion primitives are basic patterns individually learned by human's motion. However, by using the robot specific approximation of motion RSAM there occur many problems such as
- a robot specific, costly implementation
- a robot is not staying on a collision-free path
- lost features of a robot control device such as calibration, E-stop plus restarting motions, speed scaling and speed optimizations

Then the motion primitive sequence MPS is inputted by the application controller AC' into a robot control device RCD', which controls according to the inputted motion primitive sequence MPS single motions or movements of a robot manipulator RM'.

From the depicted robotic system RS' the application controller AC', the robot control device RCD' and the robot manipulator RM' are Hardware <HW>-related, the application APL', the motion planner MP and the robot specific approximation of motion RSAM are Software <SW>-related and the target positions TP, the environment model EVM, the spline motion SPM and the motion primitive sequence MPS are data-related.

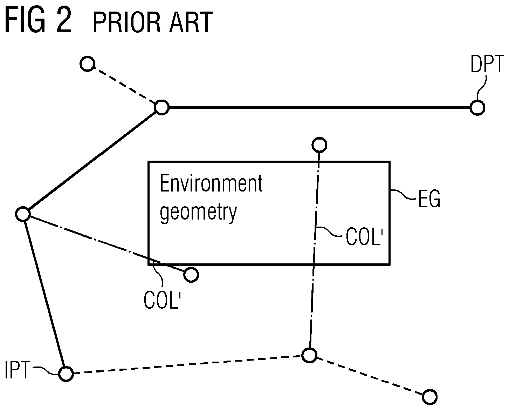

FIGURE 2 shows starting from the robotic system RS' of the FIGURE 1 - as state of the art - possible planned motions of the robot manipulator RM' from an initial point IPT to a destination point DPT with regard to an environment geometry EG according to a motion planning executed by the robot manipulator RM' of the robotic system RS' according to the FIGURE 1.

The solid lines are each a planned motion evaluated by the motion planner and executable on the robot manipulator which due to the given available motion primitives are leading at the end to a planning goal that the robot manipulator is able to move from the starting point SPT to the destination point DPT.

The dashed lines are each a hypothetical motion evaluated by the motion planner but not necessarily executable on the robot manipulator given by the available motion primitives.

The dash-dotted lines are each a failed motion evaluated by the motion planner that were rejected due to a collision COL' with the environment geometry EG.

One of the core problems of using motion planners for robots or robot manipulators today is the execution of planned motions. The reason is that the today's motion planners compute motions as splines of arbitrary shape which cannot directly be executed on most robots or robot manipulators.

It is an objective of the invention to propose a computer-implemented method, a computer-implemented tool and a robot control device for motion planning of robot manipulators as well as a robotic system, in which **(i)** collision-free motions of the robot manipulators are planned automatically and **(ii)** the motions accordingly planned are automatically executable.

This objective is solved based on a computer-implemented method defined in the preamble of claim 1 by the features in the characterizing part of claim 1.

The objective is further solved based on a computer-implemented tool defined in the preamble of claim 3 by the features in the characterizing part of claim 3.

The objective is solved furthermore based on a robot control device defined in the preamble of claim 5 by the features in the characterizing part of claim 5.

The objective is solved moreover based on a robotic system defined in the preamble of claim 6 by the features in the characterizing part of claim 6.

The main idea of the invention according to the claims 1, 3, 5 and 6 in order to plan collision-free motions by creating a motion plan for a robot manipulator controlled by a robot control device it is proposed that
**(1)** a motion planner realized preferably on the robot control device and based on a set of motion primitives is provided with a model of the robot manipulator's kinematics and geometry and a work environment of the robot manipulator, an initial configuration of the robot manipulator and a goal configuration of the robot manipulator,
**(2)** the motion planner will use by selection a predetermined set of motion primitives, which are called as local planners or steering functions and in particular being small, to create by collision check a hypothetical continuous motion from the start configuration to the goal configuration,
**(3)** the hypothetical motion is checked for the collisions using the model of the robot manipulator's kinematics and geometry and the work environment of the robot manipulator and if no collision occurs, the motion plan for a robot manipulator is created.

The idea is based on the usage of a library of motion primitives that the robot manipulator directly supports together with models of how these primitives interpolate the robot manipulator's joints during motion. Then the motion planner can compute a motion in the form of a sequence of primitive motions which can be directly executed.

In contrast to results of known approaches for motion planning of robot manipulators the result of the motion planning underlying the invention is not an arbitrary spline motion but instead a sequence of primitive motion commands that are directly supported by the robot manipulator that is supposed to move.

This has many advantages:
1. There is no need to develop a custom motion execution that supports arbitrary motion profiles for each robot brand. These developments are very costly as they involve real-time and safety issues.
2. All utility features that are supported by the robot control device can still be used. These include scaling the speed of execution, stopping and restarting the execution, user interaction for these features, safety zones programmed on the robot manipulator, support for kinematic calibration.
3. The planned motions according to the invention are in contrast to a spline motion to some degree "human readable" and can be edited, e.g. the start and end of the motion can be easily changed using the off-the-shelf programming tools of the robot manipulator.
4. A motion is immediately executable without any driver and/or trajectory-executor.
5. Safety- and/or speed-scaling- and/or a "continue-after-stop"-functionality etc. can be all implemented by the robot or robot manipulator.
6. A calibration of the robot or robot manipulator can be used.

According to the idea presented above selected types of motions primitives are used during the motion planning as the local planners, that are supported by the robot control device.

To this end the set of motions primitives is needed. This set must include three pieces of data for each motion primitive:
1. A semantic model of the selected type of motion, e.g.:
   - whether it moves a tool to a cartesian pose or specifies targets directly in joint positions.
   - what parameters for this planned motion are there, e.g. representation of targets, velocity limits, etc.
2. A simulator of an interpolation that is used on the robot manipulator to execute this planned motion.
3. A way to convert the parametrized, selected motion primitive into an executable script command for the robot manipulator.

Next according to the idea presented above it is to use the set of motion primitives during the motion planning. Instead of using the arbitrary spline motion according to the state of the art as the local planner, the motion planner creates at least one parametrized, selected primitive motion that leads from the start configuration to the goal configuration. Then the simulated interpolator is used to check the at least one parametrized, selected primitive motion for collisions. If that succeeds, the motion plan is created and can be directly executed on the robot manipulator.

Further advantages arise out of additional developments of the invention according to the dependent claims.

Moreover, advantageous further developments of the invention arise out of the following description of a preferred embodiment of the invention according to FIGURES 3 to 7. They show:
FIGURE 3 an improved robotic system for motion planning as an "implementation-concept",
FIGURE 4 an improved robotic system for motion planning as a "functional-unit-concept",
FIGURE 5 workflow steps of creating a motion planning plan,
FIGURE 6 starting from the FIGURE 1 and showing in contrast to the state of the art depicted therein the principle of the improved robotic system according to the FIGURES 3 and 4,
FIGURE 7 process flows for creating a motion planning plan for a work environment given by the environment geometry of the FIGURE 2.

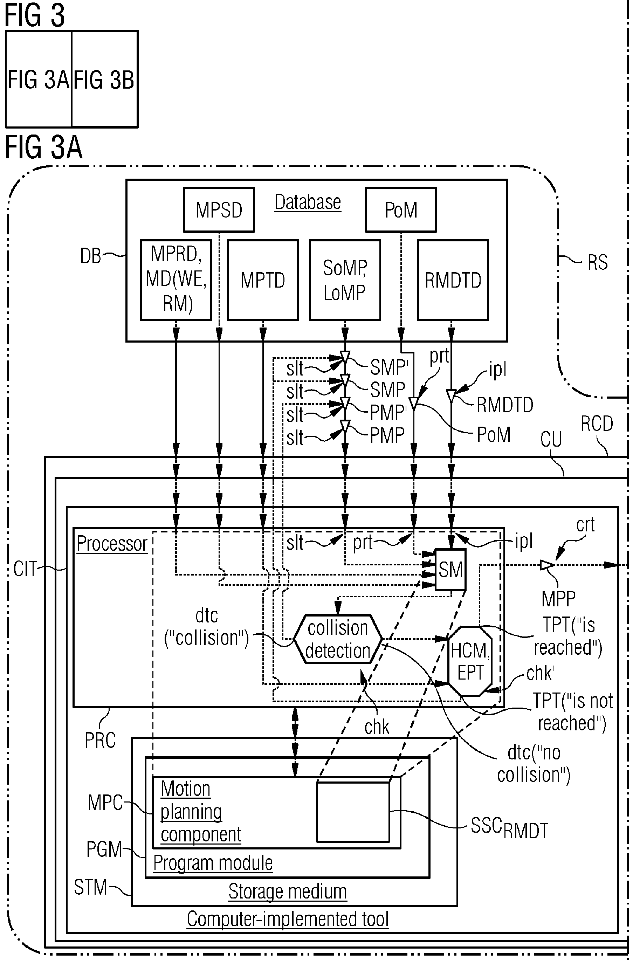

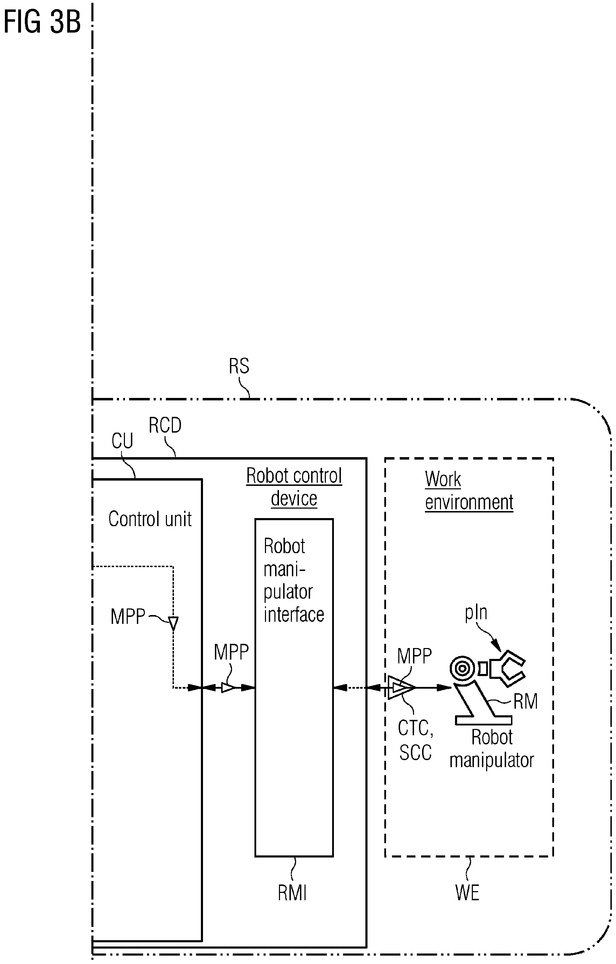

FIGURE 3 shows an improved (in comparison to the robotic system RS' according to the FIGURE 1) robotic system RS for motion planning as an "implementation-concept" to plan pin motions of a robot manipulator RM, which is an essential part of the robotic system RS and operates in work environment WE of the robotic system RS. Furthermore the robotic system RS contains a database DB for storing different data and/or data models being used for the motion planning, which is preferably designed as a local transitory storage medium or a data cloud, and a robot control device RCD as a central component of the robotic system RS including a control unit CU and a robot manipulator interface RMI for controlling the robot manipulator RM. Thereby in order to execute the motion planning the control unit CU is connected via the robot manipulator interface RMI with the robot manipulator RM.

For executing the motion planning the control unit CU includes according to the "implementation-concept" depicted in the FIGURE 3 a computer-implemented tool CIT is implemented as a sub-unit in the control unit CU. The computer-implemented tool CIT is a computer-program-product which is preferably designed as an application software, called as APP, that allows, when it is implemented, to perform special tasks. So, in the present case of the control unit CU, where the computer-program-product respectively the APP is implemented when the APP is loaded into the control unit CU, the computer-implemented tool CIT is used to plan pin the motions of the robot manipulator RM.

To this end the computer-implemented tool CIT comprises a non-transitory, processor-readable storage medium STM, in which processor-readable program-instructions of a program module PGM for planning robot manipulator motions are stored. The program module PGM includes for the motion planning a motion planner component MPC. Moreover the computer-implemented tool CIT comprises a processor PRC, which connected with the storage medium STM and executing the processor-readable program-instructions executes the motion planner component MPC to plan pin the motions of the robot manipulator RM. In the Figure 3 this is depicted by a dashed drawn lasso around executions of the processor PRC, when executing the motion planner component MPC.

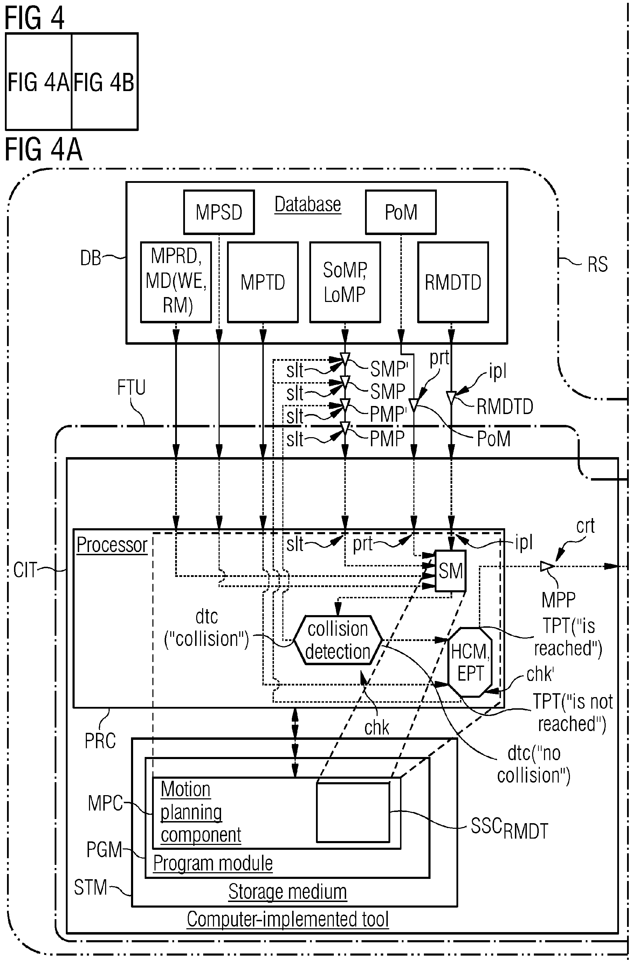

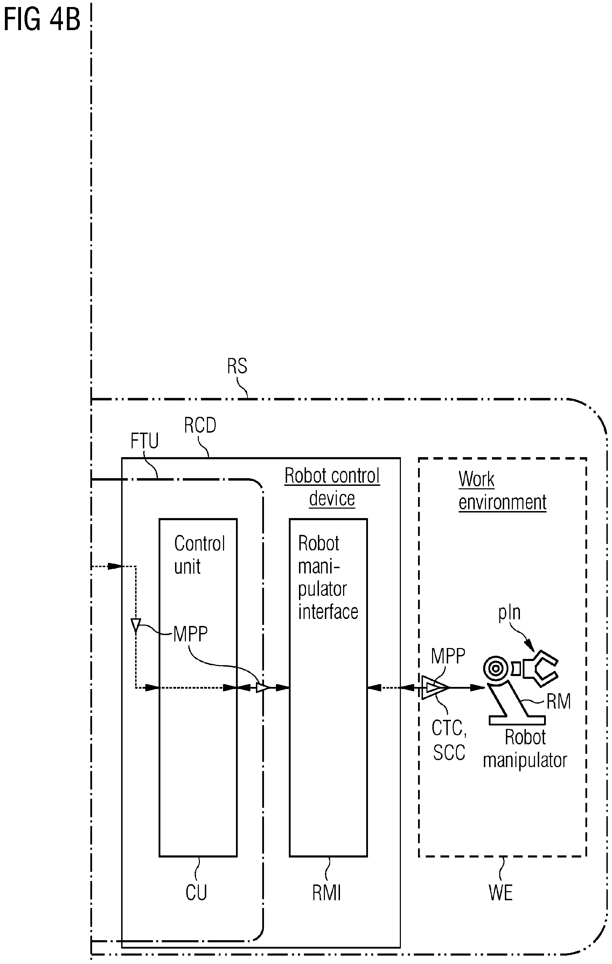

Before going into details about this, an alternative scenario of an improved robotic system RS for motion planning as a "functional-unit-concept" (FIGURE 4) should first be discussed below.

FIGURE 4 shows alternatively an improved (in comparison to the robotic system RS' according to the FIGURE 1) robotic system RS for motion planning as a "functional-unit-concept" to plan pin motions of the robot manipulator RM, which is again the essential part of the robotic system RS and operates in the work environment WE of the robotic system RS. Furthermore the robotic system RS contains the database DB for storing again the different data and/or the data models being used for the motion planning, which is again preferably designed as a local transitory storage medium or a data cloud, and the robot control device RCD as the central component of the robotic system RS including the control unit CU and the robot manipulator interface RMI for controlling the robot manipulator RM. Thereby in order to execute the motion planning the control unit CU is connected again via the robot manipulator interface RMI with the robot manipulator RM.

For executing the motion planning the control unit CU includes according to the "functional-unit-concept" depicted in the FIGURE 4 the computer-implemented tool CIT forming a functional unit FTU with the control unit CU. This functional unit FTU is preferably designed such that the Computer-implemented tool CIT is either loadable (upload) into the control unit CU according to the depiction in the FIGURE 4 or forms either (not depicted in the FIGURE 4) a cloud-based, centralized platform, e.g. a cloud server, for the robot control device RCD or a decentralized platform, e.g. a local server, for the robot control device RCD with a mutual access within the functional unit between the control unit CU and the Computer-implemented tool CIT.

In each of the cited variants of realization the computer-implemented tool CIT is again the computer-program-product which in the case upload-functionality is again preferably designed as the application software, called as APP, that allows, when it is implemented, to perform special tasks. So, in the present case of the control unit CU, when the computer-program-product respectively the APP is implemented by up-loading the APP into the control unit CU, the computer-implemented tool CIT is being able to plan pin the motions of the robot manipulator RM.

To this end the computer-implemented tool CIT comprises again the non-transitory, processor-readable storage medium STM, in which the processor-readable program-instructions of the program module PGM for planning robot manipulator motions are stored. The program module PGM includes for the motion planning again the motion planner component MPC. Moreover the computer-implemented tool CIT comprises again the processor PRC, which connected with the storage medium STM and executing the processor-readable program-instructions executes the motion planner component MPC to plan pin the motions of the robot manipulator RM. In the Figure 4 this is depicted again by the dashed drawn lasso around executions of the processor PRC, when executing the motion planner component MPC.

The motion planning for both concepts, the "implementation-concept" and the "functional-unit-concept", is generally based on creating crt a motion planning plan MPP on the basis of the different data and/or the data models being stored in the database DB, which are accessed by the processor PRC and thus being inputted into the processor PRC when executing the motion planner component MPC. The cited different data and/or the cited data models are including
- motion planning reference data MPRD concerning a model MD of the work environment WE of the robot manipulator RM,
- motion planning start data MPSD concerning a start state of the robot manipulator RM and
- motion planning target data MPTD concerning a target state for the robot manipulator RM.

By creating crt the motion planning plan MPP the robot manipulator RM is leaded from the start state to the target state when the motion planning plan MPP is executed by the robot control device RCD due to executable control commands CTC being destined and implemented by the robot manipulator RM. The cited control commands CTC are preferably script commands SCC.

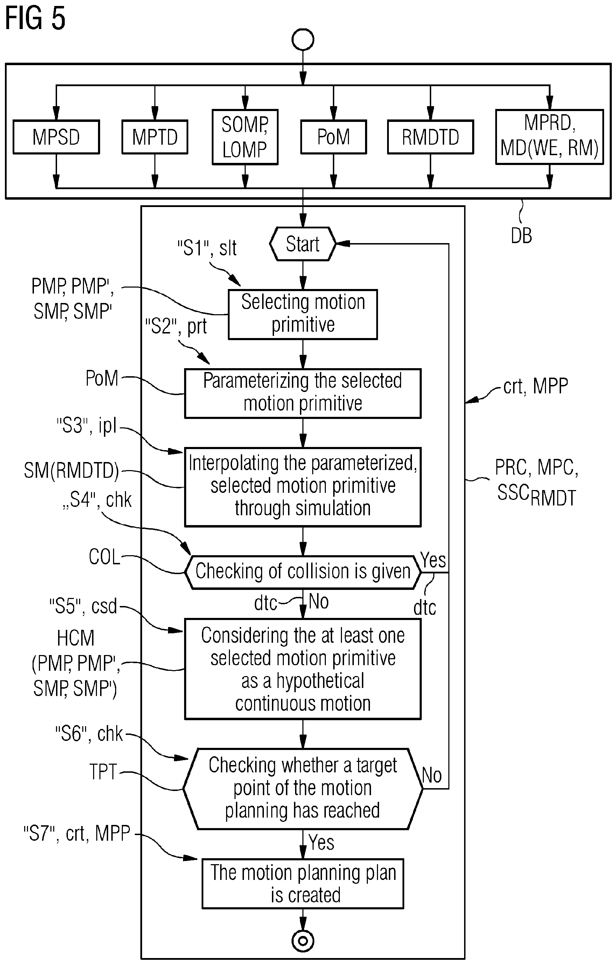

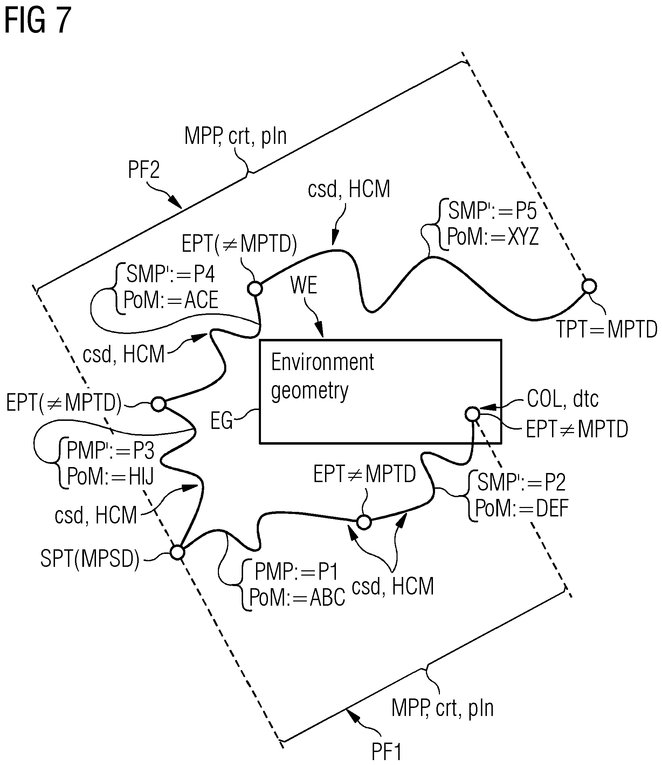

In the course of creating crt the motion planning plan MPP
- the motion planner component MPC of the program module PGM includes a robot-manipulator-digital-twin based simulation sub-component SSC_{RMDT}, which when executing the motion planner component MPC is also executed the processor PRC to plan pin the motions of the robot manipulator RM. In both FIGURES, the FIGURE 3 and the Figure 4, this is depicted by the dashed drawn lasso around a simulation execution of the processor PRC, when executing the robot-manipulator-digital-twin based simulation sub-component SSC_{RMDT} and
- the processor PRC as well as the program module PGM for planning robot manipulator motions with the motion planner component MPC and the robot-manipulator-digital-twin based simulation sub-component SSC_{RMDT} are designed such that - with respect to FIGURE 5 showing workflow steps of creating the motion planning plan and FIGURE 7 showing process flows for creating the motion planning plan for the work environment given by the environment geometry of the FIGURE 2 - following steps "S1" to "S7" are carried out iteratively if necessary by the processor PRC:
   "S1": Selecting slt out of a predetermined set of motion primitives SoMP, which is stored in the database DB and preferably in the form of a library of motion primitives LoMP, a primary motion primitive PMP by corresponding data accesses of the processor PRC on the database DB, wherein the primary motion primitive PMP starts for the motion planning at a starting point SPT based on the motion planning start data MPSD, .
   "S2": Parameterizing prt the selected motion primitive regarding parameter of the motion PoM to be planned pln, which are stored in the database DB for corresponding data accesses of the processor PRC.
   "S3": Interpolating ipl the parameterized, selected motion primitive through a simulation SM based on robot-manipulator-digital-twin-data RMDTD, which are stored in the database DB for corresponding data accesses of the processor PRC.
   "S4": Checking chk through the simulation SM whether the interpolated, parameterized, selected motion primitive leads due to the motion planning reference data MPRD to a collision of the robot manipulator RM in the work environment WE, wherein
      if a collision COL is detected dtc, out of the predetermined set of motion primitives SoMP, LoMP a further primary motion primitive PMP' is selected and then in the course of creating crt the motion planning plan MPP the steps "S2" to "S4" are carried out again or
   "S4", "S5", "S6": Checking chk through the simulation SM whether the interpolated, parameterized, selected motion primitive leads due to the motion planning reference data MPRD to a collision of the robot manipulator RM in the work environment WE, wherein
      if a collision COL is not detected dtc, it is further checked chk' whether due to either the at least one selected primary motion primitive PMP, PMP' or the at least one selected primary motion primitive PMP, PMP' and at least one selected secondary motion primitive SMP SMP' the motion planning plan MPP is created crt, in which for the said "either"- and "or"-options each a lonely motion primitive is or chained motion primitives are considered csd as a hypothetical continuous motion HCM of the robot manipulator RM, wherein
      according to steps "S4", "S5", "S6", "S7" if the considered hypothetical continuous motion HCM has reached a target point TPT for the motion planning based on the motion planning target data MPTD, which are stored in the database DB for corresponding data accesses of the processor PRC, because an end point EPT of the considered hypothetical continuous motion HCM is in terms of data coordinates non-identical to the motion planning target data MPTD of the target point TPT, the motion planning plan MPP is created crt or
      according to steps "S4", "S5", "S6" if the considered hypothetical continuous motion HCM has not reached a target point TPT for the motion planning based on the motion planning target data MPTD, which are stored in the database DB for corresponding data accesses of the processor PRC, because an end point EPT of the considered hypothetical continuous motion HCM is in terms of data coordinates non-identical to the motion planning target data MPTD of the target point TPT, out of the predetermined set of motion primitives SoPMP, LoMP **<i>** a secondary motion primitive SMP or **<ii>** in the case that by carrying out the steps in the course of creating crt the motion planning plan MPP the steps "S2" to "S4" have been carried out already for at least one time each a further secondary motion primitive SMP' is selected slt, wherein for continuing the motion planning each said motion primitive starts at the end point EPT of each correspondingly considered hypothetical continuous motion HCM and then in the course of creating crt the motion planning plan MPP the steps "S2" to "S7" are carried out again.

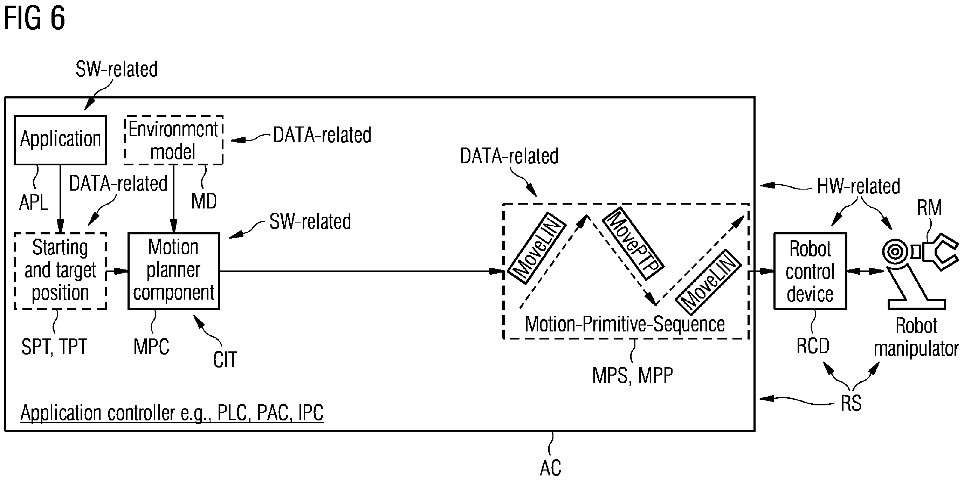

FIGURE 6 shows starting from the FIGURE 1 and showing in contrast to the state of the art depicted therein the principle of the improved robotic system according to the FIGURES 3 and 4. It is depicted the improved robotic system RS for motion planning of the robot manipulator RM based on an application controller AC such as a "Programmable Logic Controller <PLC>", a "Process Automation Controller <PAC>" and an "Industrial Personal Computer <IPC>".

Then motion planning of this robotic system RS starts with an application APL which provides the starting point STP and the target point TPT positions TP for the motion planner component MPC of the computer-implemented tool CIT. By using these points SPT, TPT and further inputs of the environment model MD the motion planner component MPC of the computer-implemented tool CIT creates based on the motion primitive sequence MPS the motion planning plan MPP.

Then the motion planning plan MPP is inputted by the application controller AC into the robot control device RCD, which controls according to the motion planning plan MPP single motions or movements of the robot manipulator RM.

From the depicted robotic system RS the application controller AC, the robot control device RCD and the robot manipulator RM are Hardware <HW>-related, the application APL and the motion planner component MPC of the computer-implemented tool CIT are Software <SW>-related and the starting and target points STP, TPT, the environment model MD, and the motion primitive sequence MPS based motion planning plan MPP are data-related.

FIGURE 7 shows two process flows PF1, PF2 for creating the motion planning plan MPP for the work environment WE given by the environment geometry EG of the FIGURE 2.

With a first process flow PF1 it is created crt the motion planning plan MPP, in which it fails to plan pin the motions of the robot manipulator from the starting point SPT to the target point TPT successfully, while with a second process flow PF2 it is created the motion planning plan MPP, in which it succeeds to plan pin the motions of the robot manipulator RM from the starting point SPT to the target point TPT.

The first process flow PF1 begins with the creation of the motion planning plan MPP at the starting point SPT by selecting a "first motion primitive P1" primary motion primitive PMP:=P1, which is parametrized regarding the parameter of the motion PoM by PoM:=ABC.

The "first motion primitive" primary motion primitive, which is a lonely motion primitive, is considered csd as the hypothetical continuous motion HCM and since **(i)** no collision COL with the environment geometry EG is detected dtc and **(ii)** the end point EPT of this considered hypothetical continuous motion HCM is in terms of its data coordinates non-identical to the motion planning target data MPTD of the target point TPT the motion planning regarding the creation of motion planning plan MPP is continued by selecting a "second motion primitive P2" secondary motion primitive SMP:=P2, which starts at the end point of the considered hypothetical continuous motion HCM and is parametrized regarding the parameter of the motion PoM by PoM:=DEF.

Through the addition of the "second motion primitive" secondary motion primitive to the considered hypothetical continuous motion HCM there are chained motion primitives which are considered csd as the hypothetical continuous motion HCM and since **(i)** a collision COL with the environment geometry EG is detected dtc and **(ii)** the end point EPT of the considered hypothetical continuous motion HCM is in terms of its data coordinates non-identical to the motion planning target data MPTD of the target point TPT the motion planning regarding the creation of motion planning plan MPP according to the first process flow PF1 is completed, because the first process flow PF1 fails due to the detected collision COL to plan pin the motions of the robot manipulator RM from the starting point SPT to the target point TPT successfully.

At this point of failure it is tried by a further process flow, the second process flow PF2, to plan pin the motions of the robot manipulator from the starting point SPT to the target point TPT successfully.

The second process flow PF2 begins with the creation of the motion planning plan MPP at the starting point SPT by selecting a "third motion primitive P3" further primary motion primitive PMP':=P3, which is parametrized regarding the parameter of the motion PoM by PoM:=HIJ.

The "third motion primitive" further primary motion primitive, which is a lonely motion primitive, is considered csd as the hypothetical continuous motion HCM and since **(i)** no collision COL with the environment geometry EG is detected dtc and **(ii)** the end point EPT of this considered hypothetical continuous motion HCM is in terms of its data coordinates non-identical to the motion planning target data MPTD of the target point TPT the motion planning regarding the creation of motion planning plan MPP is continued by selecting a "fourth motion primitive P4" further secondary motion primitive SMP':=P4, which starts at the end point of the considered hypothetical continuous motion HCM and is parametrized regarding the parameter of the motion PoM by PoM:=ACE.

Through the addition of the "fourth motion primitive" further secondary motion primitive to the considered hypothetical continuous motion HCM there are chained motion primitives which are considered csd as the hypothetical continuous motion HCM and since **(i)** no collision COL with the environment geometry EG is detected dtc and **(ii)** the end point EPT of the considered hypothetical continuous motion HCM is in terms of its data coordinates non-identical to the motion planning target data MPTD of the target point TPT the motion planning regarding the creation of motion planning plan MPP is continued by selecting a "fifth motion primitive P5" further secondary motion primitive SMP':=P5, which starts at the end point of the considered hypothetical continuous motion HCM and is parametrized regarding the parameter of the motion PoM by PoM:=XYZ.

Through the addition of the "fifth motion primitive" further secondary motion primitive to the considered hypothetical continuous motion HCM there are chained motion primitives which are considered csd as the hypothetical continuous motion HCM and since **(i)** no collision COL with the environment geometry EG is detected dtc and (**ii**) the end point EPT of the considered hypothetical continuous motion HCM is in terms of its data coordinates identical to the motion planning target data MPTD of the target point TPT the motion planning plan MPP is created crt.

## Claims

1. Computer-implemented method for motion planning of robot manipulators, by
planning (pln) motions of a robot manipulator (RM), which is controlled by a robot control device (RCD), for creating (crt) a motion planning plan (MPP) on the basis of
- motion planning reference data (MPRD) concerning a model (MD) of a work environment (WE) of the robot manipulator (RM),
- motion planning start data (MPSD) concerning a start state of the robot manipulator (RM) and
- motion planning target data (MPTD) concerning a target state for the robot manipulator (RM),
wherein the motion planning plan (MPP) leading the robot manipulator (RM) from the start state to the target state is executed by the robot control device (RCD) due to executable script commands,
**characterized by** the following steps in the course of creating (crt) the motion planning plan (MPP):
**a)** selecting (slt) out of a predetermined set of motion primitives (SoMP), in particular a library of motion primitives (LoMP), a primary motion primitive (PMP), which starts for the motion planning at a starting point (SPT) based on the motion planning start data (MPSD),
**b)** parameterizing (prt) the selected motion primitive (PMP, PMP', SMP, SMP') regarding parameter of the motion (PoM) to be planned (pin),
**c)** interpolating (ipl) the parameterized, selected motion primitive (PMP, PMP', SMP, SMP') through a simulation (SM) based on a robot-manipulator-digital-twin-data (RMDTD),
**d)** checking (chk) through the simulation (SM) whether the interpolated, parameterized, selected motion primitive (PMP, PMP', SMP, SMP') leads due to the motion planning reference data (MPRD) to a collision of the robot manipulator (RM) in the work environment (WE), wherein
**d1)** if a collision (COL) is detected (dtc), out of the predetermined set of motion primitives (SoMP, LoMP) a further primary motion primitive (PMP') is selected and then in the course of creating (crt) the motion planning plan (MPP) it is going back to step **b)** or
**d2)** if a collision (COL) is not detected (dtc), it is further checked (chk') whether due to either the at least one selected primary motion primitive (PMP, PMP') or the at least one selected primary motion primitive (PMP, PMP') and the at least one selected secondary motion primitive (SMP, SMP') the motion planning plan (MPP) is created (crt), in which for the said "either"- and "or"-options correspondingly each a lonely motion primitive is or chained motion primitives are considered (csd) as a hypothetical continuous motion (HCM) of the robot manipulator (RM), wherein
**d21**) if the considered hypothetical continuous motion (HCM) has reached a target point (TPT) for the motion planning based on the motion planning target data (MPTD), because an end point (EPT) of the considered hypothetical continuous motion (HCM) is in terms of data coordinates identical to the motion planning target data (MPTD) of the target point (TPT), the motion planning plan (MPP) is created (crt) or
**d22**) if the considered hypothetical continuous motion (HCM) has not reached a target point (TPT) for the motion planning based on the motion planning target data (MPTD), because an end point (EPT) of the considered hypothetical continuous motion (HCM) is in terms of data coordinates non-identical to the motion planning target data (MPTD) of the target point (TPT), out of the predetermined set of motion primitives (SoPMP, LoMP) **<i>** a secondary motion primitive (SMP) or **<ii>** in the case that by carrying out the steps in the course of creating (crt) the motion planning plan (MPP) it has been already gone back previously to step **b)** a further secondary motion primitive (SMP') is selected (slt), wherein for continuing the motion planning each said motion primitive starts at the end point (EPT) of each correspondingly considered hypothetical continuous motion (HCM) and then in the course of creating (crt) the motion planning plan (MPP) it is going back to step **b).**

2. Computer-implemented method according to claim 1, **characterized by**
the motion planning reference data (MPRD) of the work environment model (WE, MD), the motion planning start data (MPSD) the motion planning target data (MPTD) the predetermined set of motion primitives (SoMP, LoMP), the parameter of the motion (PoM) and the robot-manipulator-digital-twin-data (RMDTD) are stored in database (DB), in particular a local transitory storage medium or a data cloud.

3. Computer-implemented tool (CIT), in particular a Computer-Program-Product designed preferably as an Application Software <App>, for motion planning of robot manipulators, comprising a non-transitory, processor-readable storage medium (STM) having processor-readable program-instructions of a program module (PGM) for planning robot manipulator motions with a corresponding motion planner component (MPC) stored in the non-transitory, processor-readable storage medium (STM) and a processor (PRC) connected with the storage medium (STM) executing the processor-readable program- instructions of the program module (PGM) with the motion planning component (MPC) to plan (pln) motions of a robot manipulator (RM), which is controlled by a robot control device (RCD), for creating (crt) a motion planning plan (MPP) on the basis of
- motion planning reference data (MPRD) concerning a model (MD) of a work environment (WE) of the robot manipulator (RM),
- motion planning start data (MPSD) concerning a start state of the robot manipulator (RM) and
- motion planning target data (MPTD) concerning a target state for the robot manipulator (RM) each being inputted into the processor (PRC),
wherein the motion planning plan (MPP) leading the robot manipulator (RM) from the start state to the target state is executed by the robot control device (RCD) due to executable control commands (CTC), in particular script commands (SCC), **characterized in that** in the course of creating (crt) the motion planning plan (MPP) the motion planner component (MPC) of the program module (PGM) includes a robot-manipulator-digital-twin based simulation sub-component (SSC_{RMDT}), wherein the processor (PRC) as well as the program module (PGM) for motion planning with the motion planner component (MPC) and the robot-manipulator-digital-twin based simulation sub-component (SSC_{RMDT}) are designed such that the following steps are carried out by the processor (PRC):
**a)** selecting (slt) out of a predetermined set of motion primitives (SoMP), in particular a library of motion primitives (LoMP), a primary motion primitive (PMP), which starts for the motion planning at a starting point (SPT) based on the motion planning start data (MPSD),
**b)** parameterizing (prt) the selected motion primitive (PMP, PMP', SMP, SMP') regarding parameter of the motion (PoM) to be planned (pin),
**c)** interpolating (ipl) the parameterized, selected motion primitive (PMP, PMP', SMP, SMP') through a simulation (SM) based on a robot-manipulator-digital-twin-data (RMDTD),
**d)** checking (chk) through the simulation (SM) whether the interpolated, parameterized, selected motion primitive (PMP, PMP', SMP, SMP') leads due to the motion planning reference data (MPRD) to a collision of the robot manipulator (RM) in the work environment (WE), wherein
**d1)** if a collision (COL) is detected (dtc), out of the predetermined set of motion primitives (SoMP, LoMP) a further primary motion primitive (PMP') is selected and then in the course of creating (crt) the motion planning plan (MPP) it is going back to step **b)** or
**d2)** if a collision (COL) is not detected (dtc), it is further checked (chk') whether due to either the at least one selected primary motion primitive (PMP, PMP') or the at least one selected primary motion primitive (PMP, PMP') and at least one selected secondary motion primitive (SMP, SMP') the motion planning plan (MPP) is created (crt), in which for the said "either"- and "or"-options correspondingly each a lonely motion primitive is or chained motion primitives are considered (csd) as a hypothetical continuous motion (HCM) of the robot manipulator (RM), wherein
**d21)** if the considered hypothetical continuous motion (HCM) has reached a target point (TPT) for the motion planning based on the motion planning target data (MPTD), because an end point (EPT) of the considered hypothetical continuous motion (HCM) is in terms of data coordinates identical to the motion planning target data (MPTD) of the target point (TPT), the motion planning plan (MPP) is created (crt) or
**d22)** if the considered hypothetical continuous motion (HCM) has not reached a target point (TPT) for the motion planning based on the motion planning target data (MPTD), because an end point (EPT) of the considered hypothetical continuous motion (HCM) in terms of data coordinates non-identical to the motion planning target data (MPTD) of the target point (TPT), out of the predetermined set of motion primitives (SoPMP, LoMP) **<i>** a secondary motion primitive (SMP) or **<ii>** in the case that by carrying out the steps in the course of creating (crt) the motion planning plan (MPP) it has been already gone back previously to step **b)** a further secondary motion primitive (SMP') is selected (slt), wherein for continuing the motion planning each said motion primitive starts at the end point (EPT) of each correspondingly considered hypothetical continuous motion (HCM) and then in the course of creating (crt) the motion planning plan (MPP) it is going back to step **b)** .

4. Computer-implemented tool (CIT) according to claim 3, **characterized in that**
the processor (PRC) has access to a database (DB), in particular a transitory storage medium, in which the motion planning reference data (MPRD) of the work environment model (WE, MD), the motion planning start data (MPSD), the motion planning target data (MPTD), the predetermined set of motion primitives (SoMP, LoMP), the parameter of the motion (PoM) and the robot-manipulator-digital-twin-data (RMDTD) are stored.

5. Robot control device (RCD) for motion planning of robot manipulators, with a control unit (CU) connected to a robot manipulator (RM) for controlling the robot manipulator (RM) and a database (DB) for storing data and models,
**characterized by**
a computer-implemented tool (CIT) according to one of the claims 3 to 4 either being implemented as a sub-unit in the control unit (CU) or forming a functional unit (FTU) with the control unit (CU), in particular such that the computer-implemented tool (CIT) is loadable into the control unit (CU) or forms either a cloud-based, centralized platform for the robot control device (RCD) or a decentralized platform for the robot control device (RCD), for carrying out the method according to one of the claims 1 to 2.

6. Robotic system (RS) including a robot manipulator (RM),
**characterized by**
a robot control device (RCD) for motion planning of robot manipulators according to claim 5, which in the course to control the robot manipulator (RM) is connected to the robot manipulator (RM) and designed such that the computer-implemented method according to one of the claims 1 to 2 is carried out.
